Europäisches Patentamt

(19) European Patent Office

Office européen des brevets

(11) Numéro de publication: **0 359 661**

**A1**

## (12) DEMANDE DE BREVET EUROPEEN

(21) Numéro de dépôt: **89402499.1**

(22) Date de dépôt: **13.09.89**

(51) Int. Cl.⁵: **B 65 G 1/137**
**B 65 G 1/04**

(30) Priorité: **16.09.88 FR 8812087**

(43) Date de publication de la demande:
**21.03.90 Bulletin 90/12**

(84) Etats contractants désignés:
**BE DE ES GB IT SE**

(71) Demandeur: **RENAULT AUTOMATION**
**8/10 avenue Emile Zola**
**F-92109 Boulogne-Billancourt (FR)**

(72) Inventeur: **Bontemps, Jean-Pierre**
**16 Ter, Avenue de la Tour**
**F-78340 Les Clayes Sous Bois (FR)**

**Denajar, Michel**
**2, Place Robert Deny**
**F-78000 Versailles (FR)**

(74) Mandataire: **Saint Martin, René et al**
**Régie Nationale des Usines Renault 8 & 10, avenue Emile Zola**
**F-92109 Boulogne Billancourt (FR)**

(54) Portique automatisé de vidage de meubles de stockage.

㉗57 La présente invention se rapport à un portique automatisé de vidage de meubles de stockage, dans lesquels sont implantés des bacs rangés horizontalement en ligne et, verticalement en empilage de manière à pouvoir être déplacés parallèlement les uns par rapport aux autres, et de moyens de manutention desdits bacs, caractérisé en ce qu'un dispositif comprenant des unités de préhension (21) permet d'extraire de façon sélective les bacs (3) du meuble (4) et de les remettre à leur place dans ledit meuble après en avoir déposé le contenu dans les godets d'un convoyeur (5).

Figure 2
Vue de côté

EP 0 359 661 A1

**Description**

## PORTIQUE AUTOMATISE DE VIDAGE DE MEUBLES DE STOCKAGE

La présente invention se rapporte à un portique automatisé de vidage de meubles de stockage.

Habituellement, les opérations de manipulation, comme celles de la préparation des commandes de clientèle, sont effectuées manuellement. On connaît les avantages de la main-d'oeuvre humaine, mais également ses limites (coût croissant des salaires, effectifs relativement fixes ne s'accommodant pas des variations de flux de travail, etc.).

La présente invention a pour but de réaliser un gain de temps sur les opérations de vidage des bacs et d'opérer le cloisonnement physique des contenus des bacs jusqu'à la fin de leur transfert.

L'ensemble, selon l'invention, comprend:

a) un convoyeur horizontal 7 d'amenée des meubles de stockage 4, ces meubles sont constitués par un casier contenant des bacs 3 rangés, horizontalement, en ligne et, verticalement, en empilage de manière à se déplacer parallèlement les uns par rapport aux autres,

b) un portique 1 supportant une traverse motorisée 6 suivant un axe vertical et qui possède des moyens de manutention des bacs contenus dans le meuble de stockage 4,

c) un convoyeur horizontal 5 à godets basculants pouvant recevoir et évacuer le contenu des bacs manutentionnés par la traverse 6.

L'invention va maintenant être décrite avec plus de détails en se référant à un mode de réalisation donné à titre d'exemple et représenté par les dessins annexés sur lesquels:

- la figure 1 est une vue en élévation du portique selon l'invention,
- la figure 2 est une vue de côté de la figure 1,

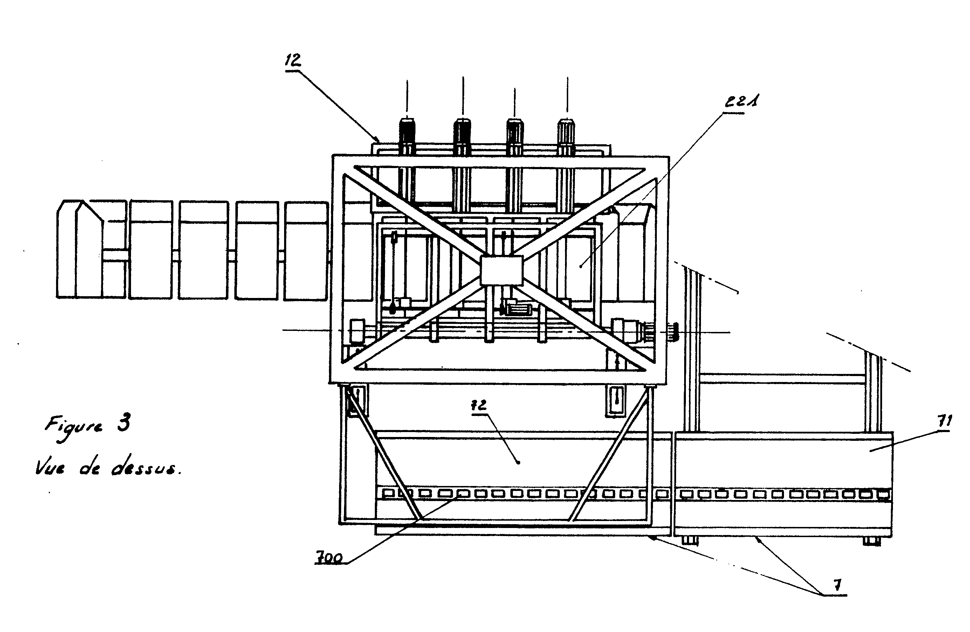

- la figure 3 est une vue de dessus des figures 1 et 2,

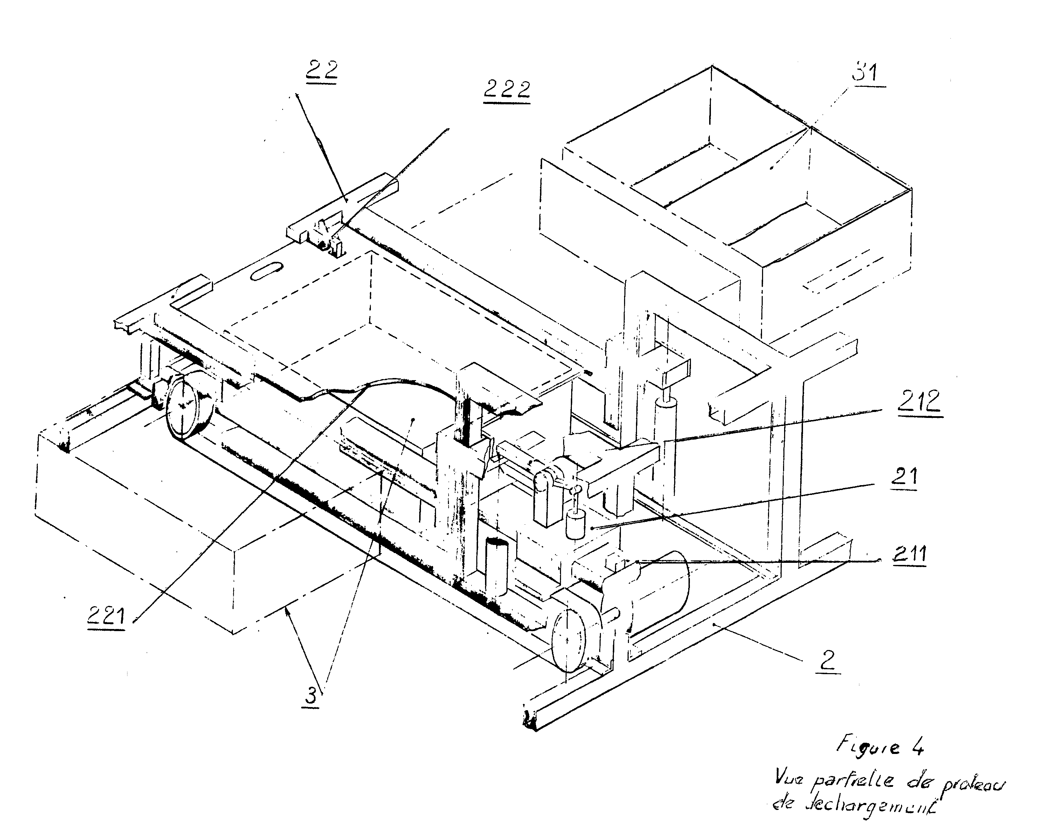

- la figure 4 est une vue partielle des moyens de manutention des bacs supportés par la traverse 6.

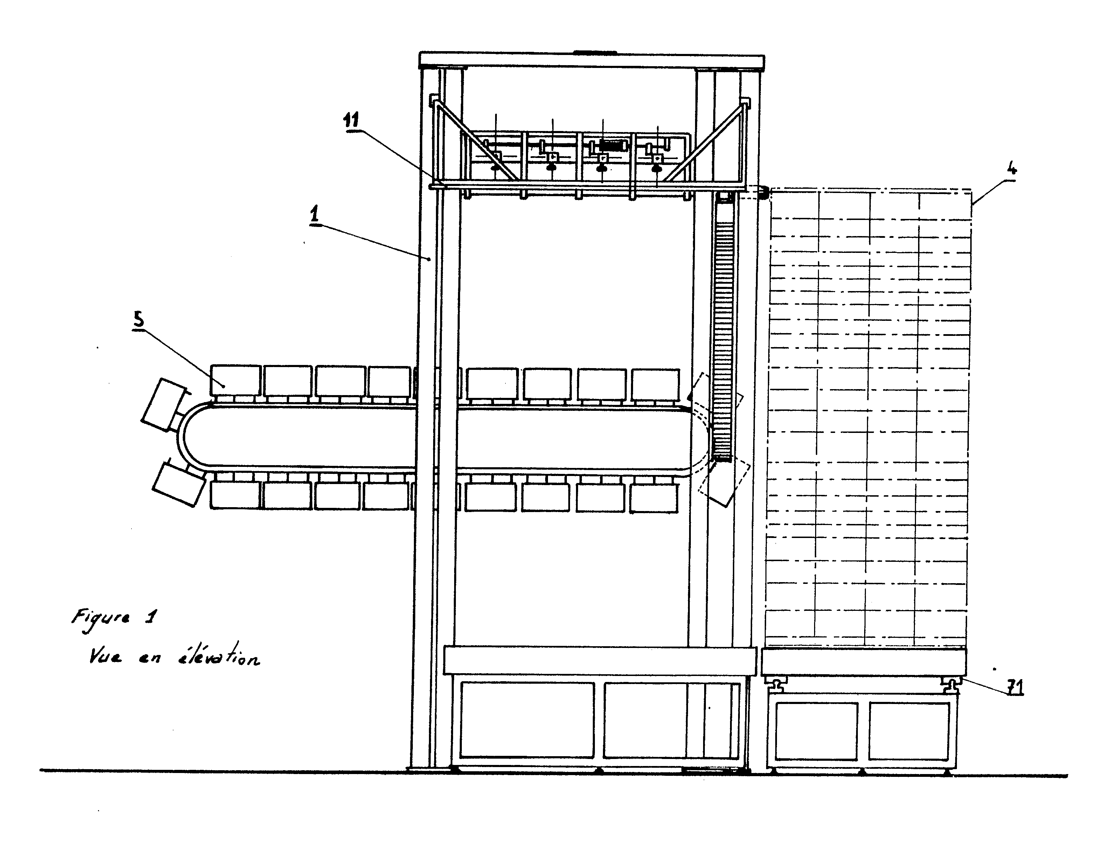

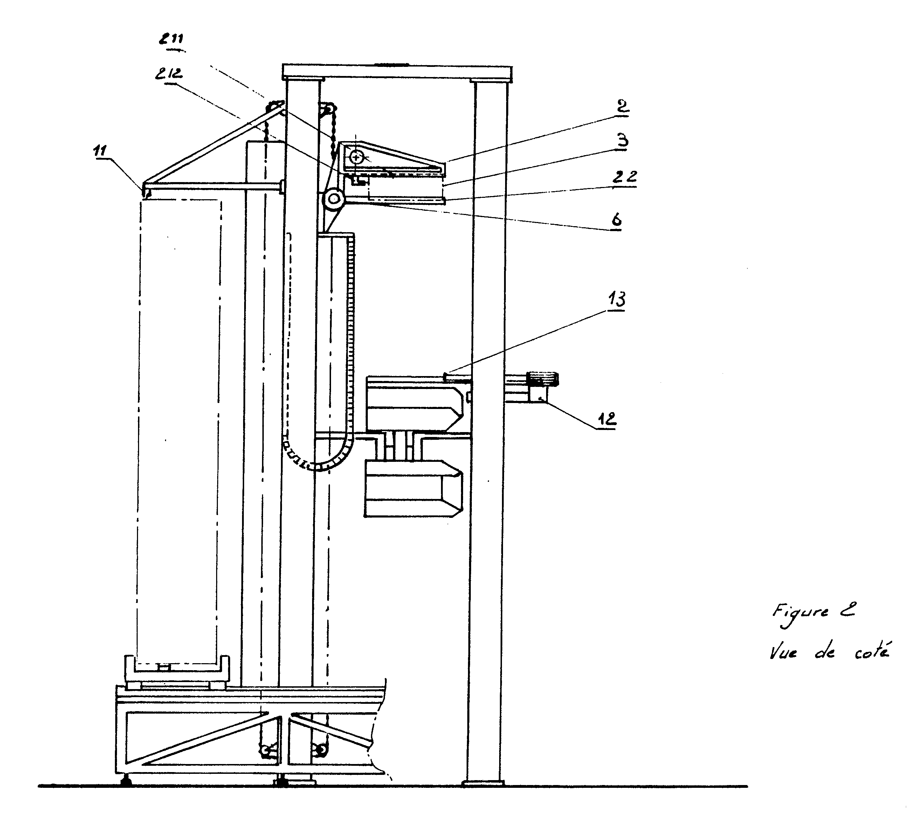

Sur les figures 1 et 2 est représenté en trait fin interrompu un meuble de stockage 4.

Le portique se compose d'un châssis fixe 1 sur lequel se déplace verticalement une traverse 6 sur laquelle est fixée un plateau 2 opérant l'extraction des bacs 3 du meuble de stockage 4, ainsi que leur vidage, et leur remise en place dans le meuble de stockage. Il supporte également un convoyeur à godets 5 qui reçoit les contenus des bacs après vidage. Le meuble de stockage est amené au portique par le chemin de convoyage 7.

Le plateau 2 porte plusieurs unités 21 de préhension et de transfert de bacs 3, susceptibles de déplacer les bacs parallèlement à la direction de guidage des bacs dans les meubles de manière à les extraire et les introduire dans le meuble de stockage. Chaque unité de transfert se compose d'une glissière 211 s'étendant selon une direction parallèle à la direction de guidage des bacs et d'une pince 212 mobile selon cette direction. Cette pince est susceptible de s'accrocher à la face avant d'un bac de manière à le déplacer. Le déplacement est assuré par un moteur.

Le plateau 2 porte également un cadre horizontal 22 pouvant coulisser selon un axe parallèle aux faces verticales des bacs.

Le cadre est mis en mouvement par des vérins pneumatiques.

Dans l'épaisseur du cadre 22, des panneaux 221 mobiles en nombre égal au nombre de bacs mis dans une rangée de meuble de stockage coulissent dans des glissières parallèles à l'axe de transfert des bacs. La surface utile d'un panneau est égale à la surface délimitée par les bords supérieurs des 4 parois verticales intérieures d'un bac.

Chaque panneau est immobilisé par un ergot de verrouillage vertical.

Le cadre exerce sur les bacs, lorsque ceux-ci sont sur le plateau, un effort supérieur à leur poids maxi ; les panneaux obturent complètement la face ouverte des bacs.

La traverse 6 est munie d'un axe rotatif qui permet au plateau d'effectuer un demi-tour. Le mouvement est assuré par un mécanisme à moteur.

Le châssis 1 est muni d'un cadre 12 muni de glissières à panneaux avec un pas identique au cadre 22. Sur ce cadre, sont disposés des systèmes de translation de panneaux composés d'un doigt vertical coulissant 13 selon un axe horizontal parallèle aux glissières des panneaux. Le mouvement du doigt est réalisé par un dispositif à moteur. La course du doigt peut être soit d'un longueur de bac, soit de deux demi-longueurs lorsque le bac comporte une cloison centrale transversale 31.

Le convoyeur 5 est lié au châssis 1 par des pattes de fixation. Il peut être éventuellement soutenu par un châssis complémentaire. Les godets sont de dimensions équivalant aux bacs, leur pas est égal au pas des bacs dans le meuble de stockage.

Les godets peuvent être du type basculant de façon à permettre leur vidage sur le brin d'aller avant de s'engager sur le brin de retour.

Le convoyeur 7 a pour mission de déplacer le meuble de stockage. Il est composé d'un chariot mobile 71 qui permet de déplacer le meuble dans un sens perpendiculaire au sens du convoyage assuré par les galets porteurs et moteurs 700.

Le chemin de guidage supérieur 11 assure la stabilité et la mise en référence verticale du meuble lorsque celui-ci est sur le tronçon de convoyage 72.

Le fonctionnement du portique de déchargement va maintenant être expliqué.

Le meuble de stockage 4 plein est chargé par convoyage sur le chariot 71. Le chariot est mis en translation pour être placé dans l'alignement du tronçon 72. Le meuble est convoyé par les galets 700 et mis dans l'alignement du portique de façon que les unités de préhension 21 puissent saisir les bacs. Le plateau 2 se déplace dans l'axe vertical pour se mettre en face de la première rangée de bacs à vider. La rangée de bacs est saisie par les unités de préhension 21 et est extraite du meuble.

Elle est translatée sur le plateau. En fin de translation, le cadre 22 est appliqué sur la rangée de bacs et la maintient pressée.

La traverse 6 monte en position haute et entraîne le plateau 2 dans sa course. Arrivée en fin de course haute, le plateau et le cadre 22 effectuent une rotation d'un demi-tour autour d'un axe horizontal et les bacs sont ainsi retournés.

La traverse 6 redescend jusqu'à ce que le cadre 22 vienne en contact avec le cadre 12. Les ergots de verrouillage 222 sont mis en mouvement au contact du cadre 12 et libèrent les panneaux 221.

Dans le même mouvement de descente, les doigts de translation 13 des panneaux sont mis en liaison avec ceux-ci et la mise en mouvement des panneaux a lieu.

Les panneaux coulissent ainsi dans le cadre 22 en pénétrant sur les glissières du cadre 12 et découvrent la face ouverte des bacs d'une longueur qui peut être soit d'un demi-bac, soit d'un bac complet. Par cette opération, le contenu des bacs tombe par gravité jusque dans les godets du convoyeur 5. En fonction de la présence ou non de bacs cloisonnés, le convoyeur est susceptible d'avancer encore d'un certain nombre de pas de façon à présenter des godets vides sous les bacs de façon à pouvoir translater encore d'un demi-bac les panneaux pour vider les seconds demi-bacs.

Lorsque tous les bacs sont entièrement vidés, les doigts remettent à leur place d'origine les panneaux dans le cadre 22. A la fin de cette opération, la traverse 6 remonte légèrement et la rotation du plateau en sens inverse d'un demi-tour a lieu. Après la rotation, le cadre 22 se relève et libère les bacs. Le plateau par un mouvement vertical de la traverse est aligné sur les emplacements vides des bacs dans le meuble. Les dispositifs de translation repoussent les bacs jusqu'à fond de leur emplacement et les lâchent.

La traverse est mise ensuite en translation verticale de façon à venir en face de la deuxième rangée de bacs pour les vider.

En réitérant les opérations précédentes, tous les bacs du meuble sont vidés. Le meuble vide est évacué et est remplacé par un autre à l'aide du chemin de convoyage 7.

**Revendications**

1. Portique automatisé de vidage de meubles de stockage, dans lesquels sont implantés des bacs rangés horizontalement en ligne et, verticalement en empilage de manière à pouvoir être déplacés parallèlement les uns par rapport aux autres, et de moyens de manutention desdits bacs, caractérisé en ce qu'un dispositif comprenant des unités de préhension (21) permet d'extraire de façon sélective les bacs (3) du meuble (4) et de les remettre à leur place dans ledit meuble après en avoir déposé le contenu dans les godets d'un convoyeur (5).

2. Dispositif selon la revendication 1 caractérisé en ce que la superstructure est constituée d'un chemin de convoyage (7) d'amenée des meubles (4) devant un portique (1) sur lequel coulisse une traverse (6) portant des unités de préhension et de transfert des bacs (3), et un convoyeur à godets (5) fixé sur ledit portique (1).

3. Dispositif selon les revendications 1 et 2 caractérisé en ce que les unités de préhension (21) déposent le contenu des bacs (3) dans les godets du convoyeur (5) par retournement de ces bacs.

4. Dispositif selon la revendication 3 caractérisé en ce que la traverse (6) possède autant d'unités de préhension (21) que de bacs rangés horizontalement en ligne dans le meuble de stockage (4), que la commande de chaque unité de préhension (21) est indépendante et qu'un cycle machine permet de manutentionner un nombre variable de bacs, dont le maximum est celui compris dans la rangée horizontale du meuble de stockage.

5. Dispositif selon la revendication 3 caractérisé en ce que les unités de préhension (21) possèdent des panneaux coulissants (221) qui obturent la face ouverte des bacs (3) et les immobilisent sur le cadre (12) pendant l'opération de retournement.

6. Dispositif selon les revendications précédentes caractérisé en ce que les bacs (3) peuvent posséder une cloison de séparation (31) capable de diviser le volume interne du bac et que les panneaux coulissants (221) peuvent dégager la partie correspondante du bac (3) pendant l'opération de vidage.

Figure 1
Vue en élévation

11

1

5

4

71

EP 0 359 661 A1

Figure 2
Vue de coté

Figure 3
Vue de dessus.

22

222

31

212

21

211

2

221

3

Figure 4

Vue partielle de plateau
de déchargement

EP 0 359 661 A1

# RAPPORT DE RECHERCHE EUROPEENNE

EP  89 40 2499

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-2 140 214  (STAHLHOF BREUNINGER & GRÖZINGER)<br>* En entier *<br>--- | 1,2 | B 65 G  1/137<br>B 65 G  1/04 |
| A | FR-A-2 565 202  (SOCIETE NATIONALE D'EXPLOITATION INDUSTRIELLE DES TABACS ET DES ALLUMETTES)<br>* En entier *<br>----- | 1,2 | |

### DOMAINES TECHNIQUES RECHERCHES (Int. Cl.5)

B 65 G

**Le présent rapport a été établi pour toutes les revendications**

| Lieu de la recherche | Date d'achèvement de la recherche | Examinateur |
|---|---|---|
| LA HAYE | 15-12-1989 | OSTYN T.J.M. |

CATEGORIE DES DOCUMENTS CITES

X : particulièrement pertinent à lui seul
Y : particulièrement pertinent en combinaison avec un
 autre document de la même catégorie
A : arrière-plan technologique
O : divulgation non-écrite
P : document intercalaire

T : théorie ou principe à la base de l'invention
E : document de brevet antérieur, mais publié à la
 date de dépôt ou après cette date
D : cité dans la demande
L : cité pour d'autres raisons
........................................................................
& : membre de la même famille, document correspondant